# EUROPÄISCHE PATENTSCHRIFT

(11) **EP 2 564 500 B1**
(45) Veröffentlichungstag und Bekanntmachung des Hinweises auf die Patenterteilung: **19.02.2020**
(21) Anmeldenummer: 11716907.8
(22) Anmeldetag: 27.04.2011
(51) Int. Cl.: H02M 5/257

(54) **SCHALTERFREIE DIAC-ERSATZSCHALTUNG**
SWITCHLESS DIAC EQUIVALENT CIRCUIT
CIRCUIT DE REMPLACEMENT À DIAC SANS COMMUTATEUR

(30) Priorität: 27.04.2010 DE 102010018588
(43) Veröffentlichungstag der Anmeldung: 06.03.2013
(73) Patentinhaber: Kurz Elektronik GmbH, 75382 Althengstett (DE)
(72) Erfinder: SCHULZ, Detlef, 72657 Altenriet (DE)
(74) Vertreter: Witte, Weller & Partner Patentanwälte mbB
(86) Internationale Anmeldenummer: PCT/EP2011/056645
(87) Internationale Veröffentlichungsnummer: WO 2011/134990

(56) Entgegenhaltungen:
- EP-A2- 1 648 083
- DE-A1- 2 422 060
- DE-A1- 3 423 218
- DE-A1- 10 025 368
- DE-U1- 20 102 753
- US-A- 3 543 141

## Beschreibung

Die vorliegende Erfindung betrifft eine Vorrichtung zur Leistungssteuerung von einem an ein Wechselspannungs-Versorgungsnetz angeschlossenen elektrischen Verbraucher, mit einem in Reihe mit dem Verbraucher liegenden Schaltungselement, das einen Steuereingang aufweist, einer Zündeinrichtung zur Ansteuerung des Schaltungselements und Ausführung eines Phasenanschnitts mit einem einstellbaren Phasenwinkel, und einem Einstellelement, das der Zündeinrichtung zugeordnet ist und ein Einstellen des Phasenwinkels erlaubt.

Eine solche Vorrichtung zur Leistungssteuerung ist beispielsweise aus der Druckschrift DE 10 2005 020 414 A1 bekannt. Die darin gezeigte so genannte Phasenanschnittsteuerung benutzt ein Potentiometer als Einstellelement, mit dem der Nutzer die dem elektrischen Verbraucher zugeführte Leistung einstellen kann. Darüber hinaus ist ein Netzschalter vorgesehen, um die Phasenanschnittsteuerung und damit die zu versorgende Last abzuschalten, das heißt galvanisch vom Netz zu trennen.

Ferner ist eine solche Vorrichtung zur Leistungssteuerung aus der Druckschrift US 3,543,141 A bekannt. Auch die darin gezeigte Phasenanschnittsteuerung benutzt ein Potentiometer als Einstellelement, mit dem der Nutzer die dem elektrischen Verbraucher zugeführte Leistung einstellen kann. Als Besonderheit sind darin zwei separate Phasenschieber vorgesehen, welche jeweils einen variablen Widerstand und einen zugeordneten Kondensator aufweisen, mittels welchen der Phasenanschnitt für positive und negative Halbwellen der Wechselspannung unabhängig voneinander eingestellt werden kann. Darüber hinaus ist wieder ein Netzschalter vorgesehen, um die Phasenanschnittsteuerung und damit die zu versorgende Last abzuschalten, das heißt galvanisch vom Netz zu trennen.

Obgleich sich diese Phasenanschnittsteuerung in der Praxis bewährt hat, bleibt weiterhin der Wunsch bestehen, durch Einsparung von Bauelementen die Herstellungskosten zu reduzieren, ohne jedoch die Funktionalität zu beeinträchtigen.

Diese Aufgabe wird bei der eingangs genannten Vorrichtung durch eine Überwachungseinrichtung gelöst, die dem Einstellelement sowie der Zündeinrichtung zugeordnet ist und ausgelegt ist, die Einstellposition des Einstellelements zu erfassen und abhängig davon die Zündeinrichtung zu deaktivieren.

Das heißt mit anderen Worten, dass eine Schaltung vorgesehen ist, die die Einstellposition des Einstellelements überwacht und bei Erreichen einer bestimmten Position, üblicherweise einem Endanschlag des Einstellelements, die Zündeinrichtung so schaltet, dass keine Zündung des Schaltungselements mehr erfolgt. Insbesondere kann die gewünschte Funktion ohne teure integrierte Schaltkreise (ICs) bzw. Mikroprozessoren realisiert werden, das heißt alleine mit diskreten Bauteilen.

Mit Hilfe der Überwachungseinrichtung ist es möglich, auf den bisher eingesetzten mechanischen Netzschalter zum Ausschalten der Vorrichtung zu verzichten. Es lässt sich folglich ein mechanisches Bauteil einsparen. Stattdessen kann das sowieso vorhandene kostengünstige Einstellelement nicht nur für die Einstellung der Leistung sondern auch zum Ausschalten verwendet werden, wobei die Kostenersparnis gegenüber einer Lösung mit mechanischem Schalter die zusätzlichen Kosten für die Überwachungseinrichtung übersteigt. Auch gegenüber Lösungen mit Mikroprozessoren zur Phasenanschnittsteuerung sind die Kosten bei der vorliegenden erfindungsgemäßen Vorrichtung deutlich geringer.

Bei einer bevorzugten Weiterbildung ist das Einstellelement als Potentiometer ausgebildet, wobei die Überwachungseinrichtung mit dem Ausgang des Potentiometers verbunden ist, um die Spannung am Ausgang und damit die Einstellposition zu erfassen. Vorzugsweise besitzt die Überwachungseinrichtung ein Mittel zum Vergleich der Spannung am Ausgang mit einem Spannungsreferenzwert.

Die Überwachung der Ausgangsspannung am Potentiometer ist besonders einfach möglich und liefert ein sehr genaues Ergebnis bezüglich der Einstellposition des Potentiometers. Fällt beispielsweise diese überwachte bzw. erfasste Ausgangsspannung des Potentiometers unter einen vorgegebenen Referenz- bzw. Schwellenwert, wird dies von der Überwachungseinrichtung als Erreichen des Endanschlags gedeutet und ein Signal zum Deaktivieren der Zündeinrichtung ausgegeben. Ein solcher Aufbau ist baulich sehr einfach umzusetzen und damit kostengünstig zu realisieren.

Bei einer bevorzugten Weiterbildung weist die Zündeinrichtung ein Zeitglied mit zumindest einem Kondensator auf, und die Überwachungseinrichtung weist einen Transistor auf, dessen Basis mit einer weitgehend konstanten Spannung versorgt ist, dessen Emitter mit dem Ausgang des Potentiometers und dem Zeitglied verbunden ist, so dass der Transistor in den leitenden Zustand übergeht, wenn die Spannung am Ausgang unter einen bestimmten Wert fällt, der durch die Spannung an der Basis festgelegt ist, und dessen Kollektor mit dem Zeitglied verbunden ist, so dass das Zeitglied im leitenden Zustand des Transistors deaktiviert ist. Bevorzugt weist das Zeitglied einen Widerstand oder einen Kondensator auf, wobei der Transistor mit Kollektor und Emitter parallel zu dem Kondensator liegt. Das heißt mit anderen Worten, dass die Überwachungseinrichtung einen Transistor als Schaltelement aufweist, der dann in den leitenden Zustand übergeht, wenn die Spannung am Ausgang des Potentiometers unter einen vorgegebenen Spannungswert, der durch die Spannung an der Basis des Transistors eingestellt wird, fällt. Der leitende Transistor schafft eine Verbindung zwischen den beiden Elektroden des Kondensators des Zeitglieds, so dass das Zeitglied kein regelmäßiges Signal für die Phasenanschnittsteuerung mehr liefert. Der elektrische Verbraucher wird folglich nicht mehr mit Leistung versorgt, da das Schaltungselement nicht mehr über die Zündeinrichtung angesteuert wird.

Es zeigt sich, dass eine in dieser Weise realisierte Überwachungseinrichtung sehr einfach und damit kostengünstig ist und nicht viele Bauteile benötigt. Die Überwachungseinrichtung ist vielmehr sehr einfach in bestehende Phasenanschnittsteuerungen zu integrieren, was einen weiteren Vorteil darstellt.

An dieser Stelle sei jedoch angemerkt, dass auch andere Lösungen hinsichtlich der Überwachungseinrichtung denkbar sind und der Einsatz eines Transistors nur eine von vielen denkbaren Möglichkeiten ist.

Bei einer bevorzugten Weiterbildung ist ein Zündkondensator vorgesehen, der mit der Zündeinrichtung gekoppelt ist und die zum Aktivieren des Schaltungselements erforderliche Energie liefert, und die Zündeinrichtung weist ein Schaltelement, das bei dessen Aktivierung eine Verbindung zwischen Zündkondensator und Steuereingang des Schaltungselements herstellt, ein Freigabeelement, das die am Zündkondensator anliegende Spannung mit einem Referenzwert vergleicht und ein Freigabesignal erzeugt, und ein Zeitelement auf, das mit dem Freigabeelement verbunden ist und in Antwort auf das Freigabesignal und nach Ablauf einer vorgebbaren Zeitdauer das Schaltelement aktiviert, derart, dass die am Zündkondensator gespeicherte Energie nahezu vollständig zum Zünden des Schaltungselements verwendet wird.

Diese Maßnahme hat den Vorteil, dass nahezu die gesamte im Zündkondensator gespeicherte Energie zum Zünden des Schaltungselements, vorzugsweise eines TRIACs, verwendet werden kann. Dies ermöglicht wiederum, diesen Zündkondensator kleiner zu dimensionieren, so dass eine Kapazität von 10 nF ausreichen kann.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachstehend anhand eines Ausführungsbeispiels mit Bezug auf die Zeichnung näher erläutert. Dabei zeigen:
- Fig. 1: ein schematisches Schaltbild einer erfindungsgemäßen Vorrichtung;
- Fig. 2A: ein schematisches Blockschaltdiagramm einer in Fig. 1 verwendeten DIAC-Ersatzschaltung;
- Fig. 2B: ein schematisches Blockschaltdiagramm eines Zeitelements, das in Fig. 2A gezeigt ist;
- Fig. 3: ein nicht maßstäbliches Diagramm, das den Spannungsverlauf am Zündkondensator zeigt; und
- Fig. 4: ein Schaltbild einer erfindungsgemäßen Vorrichtung.

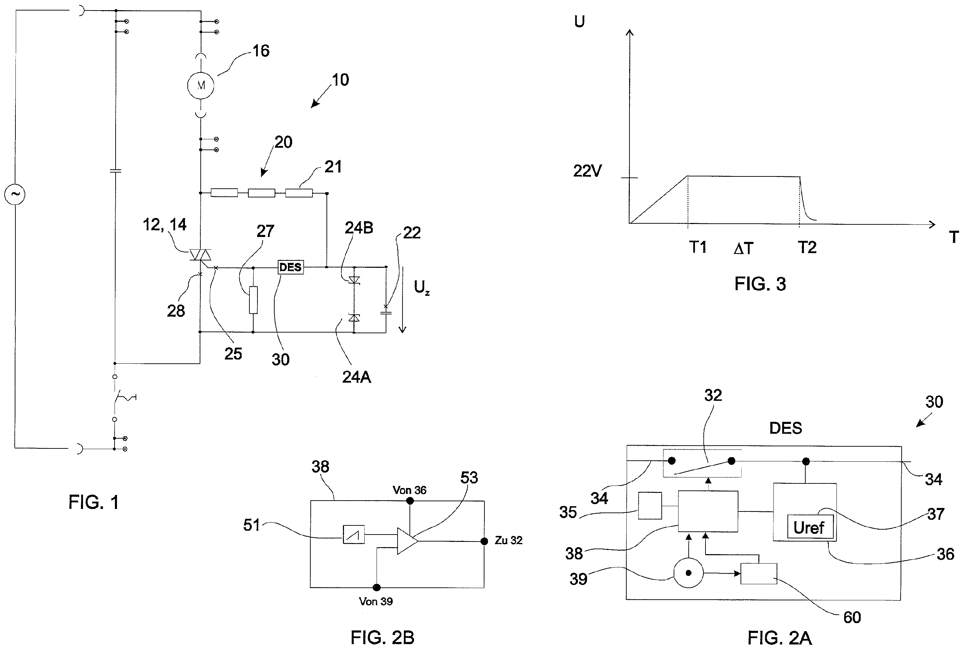

In Fig. 1 ist eine Vorrichtung zur Leistungssteuerung (nachfolgend kurz Phasenanschnittsteuerung genannt) in Form eines Blockschaltbildes dargestellt und mit dem Bezugszeichen 10 gekennzeichnet. Diese Phasenanschnittsteuerung 10 dient dazu, die einem elektrischen Verbraucher, wie beispielsweise einem Motor, insbesondere für Staubsauger, zugeführte Leistung durch Phasenanschnitt der Wechselspannung zu steuern. Grundsätzlich sind solche Phasenanschnittsteuerungen bekannt, so dass auf deren genaue Funktionsweise an dieser Stelle nicht weiter eingegangen werden muss.

Die Phasenanschnittsteuerung 10 umfasst ein Schaltungselement 12, das in dieser Ausführungsform als TRIAC 14 ausgebildet ist. Der TRIAC 14 liegt in Reihe mit dem zu versorgenden elektrischen Verbraucher 16, hier einem Universalmotor. Diese Reihenschaltung aus TRIAC 14 und Motor 16 ist an einer Wechselspannungsversorgung angeschlossen. Üblicherweise liegt die Wechselspannung bei 230 V und 50 Hz.

Parallel zu dem TRIAC 14 ist eine Reihenschaltung aus einem Widerstand 20 und einem Kondensator 22 angeordnet. Der Widerstand 20 setzt sich im vorliegenden Ausführungsbeispiel aus mehreren Einzelwiderständen 21 zusammen. Diese Einzelwiderstände 21 können als so genannte SMD-Widerstände 21 mit 0,25 W Leistung ausgebildet sein. Selbstverständlich kann die Anzahl dieser Einzelwiderstände 21 variieren und weniger oder auch mehr als die gezeigte Anzahl von drei umfassen.

Der Kondensator 22 dient als so genannter Zündkondensator, an dem eine Spannung U_{z} anliegt.

Parallel zu dem Zündkondensator 22 liegt eine Reihenschaltung aus zwei Zener-Dioden 24a und 24b, die gegenpolig verschaltet sind. Das bedeutet, dass für jede Halbwelle der Versorgungsspannung eine der beiden Zener-Dioden 24a, 24b in Stromrichtung liegt. Die Zener-Dioden 24a, 24b dienen dazu, die am Zündkondensator 22 anliegende Spannung U_{z} auf einen vorgegebenen Wert, vorzugsweise 22 V, zu begrenzen.

Zwischen dem Widerstand 20 und dem Zündkondensator 22 ist eine DIAC-Ersatzschaltung 30 angeschlossen, die eine Verbindung zum Steuereingang (Gate) 25 des TRIACs 14 herstellt. Schließlich ist noch ein Widerstand 27 vorgesehen, der zwischen Gate 25 und einer Elektrode 28 des TRIACs 14 liegt.

Bei der DIAC-Ersatzschaltung 30 handelt es sich um eine Baugruppe, die als Blockschaltdiagramm in Fig. 2A gezeigt ist und im Wesentlichen dazu dient, den TRIAC 14 zu einem vorgegebenen Zeitpunkt zu zünden, d.h. in den leitenden Zustand zu versetzen, so dass der Motor 16 mit Energie versorgt wird. Bei bisherigen Phasenanschnittsteuerungen hat diese Funktion ein so genanntes DIAC ausgeführt.

Die DIAC-Ersatzschaltung 30 weist mehrere funktionale Gruppen auf, von denen in Fig. 2A sechs dargestellt sind.

Zum einen enthält die DIAC-Ersatzschaltung 30 ein Schaltelement 32, das eine Verbindung zwischen den beiden Anschlusspunkten 34 herstellen kann. Bei geschlossenem Schaltelement 32 ist folglich der Zündkondensator 22 mit dem Gate 25 des TRIACs 14 verbunden.

Die DIAC-Ersatzschaltung 30 weist ferner eine Freigabeschaltung 36 auf, der die am Anschlusspunkt 34 und damit die am Zündkondensator 22 anliegende Spannung U_{z} zugeführt ist. Diese Spannung wird überwacht und nach Erreichen einer Referenzspannung U_{ref} wird ein Freigabesignal erzeugt. Statt dem Vergleich mit einer Referenzspannung kann das Freigabesignal auch dann erzeugt werden, wenn die Spannung am Zündkondensator 22 nicht mehr ansteigt.

Ferner ist ein Zeitglied 38 vorgesehen, das das Schaltelement 32 nach Ablauf bestimmter einstellbarer Zeitperioden ein- und wieder ausschalten kann. Die Zeitperiode ΔT ist über ein Stellelement 39 einstellbar. Mit Hilfe dieses Stellelements 39, das üblicherweise in Form eines Potentiometers vorgesehen ist, kann der so genannte Phasenwinkel (auch Zündwinkel genannt) der Phasenanschnittsteuerung 10 eingestellt werden. Das Zeitglied 38 ist zusätzlich mit einer Sanftanlaufschaltung 35 verbunden, die in der Startphase den Phasenwinkel langsam zu dem eingestellten Phasenwinkel verändert. Schließlich ist noch eine Überwachungseinrichtung 60 vorgesehen, die einerseits dem Stellelement 39 zugeordnet ist und andererseits dem Zeitglied 38. Die Funktion der Überwachungseinrichtung 60 wird später noch im Detail erläutert werden.

Der Aufbau des Zeitglieds 38 ist in Fig. 2B dargestellt. Es umfasst einen Rampengenerator 51, der mit Beginn jeder Halbwelle der Versorgungsspannung eine rampenförmige Spannung erzeugt. Bevorzugt ist die Steigung der Rampe fest.

Die Rampenspannung wird einem Vergleicher 53 zugeführt, der sie mit einem Schwellenwert vergleicht. Der Schwellenwert wird über das Stellelement 39 eingestellt. Sobald die Rampenspannung den Schwellenwert erreicht, wird ein Signal erzeugt, welches das Schaltelement 32 aktiviert.

Der Vergleicher 53 weist noch einen Freigabe/Sperr-Eingang auf, der mit dem Ausgang der Freigabeschaltung 36 verbunden ist. Dadurch ist es möglich, den Vergleicher 53 erst zu einem bestimmten Zeitpunkt freizugeben, um auf diese Weise beispielsweise Frühzündungen zu vermeiden.

Mit Bezug auf die Fig. 3 soll nachfolgend die Funktion der Phasenanschnittsteuerung 10, und insbesondere der DIAC-Ersatzschaltung 30 erläutert werden.

Zu Beginn einer jeden Halbwelle der Versorgungsspannung wird der Zündkondensator 22 über den Widerstand 20 aufgeladen. Dabei steigt die Spannung U_{z} kontinuierlich an bis zum Zeitpunkt T1, bei dem die Zener-Spannung der parallelen Zener-Diode 24a bzw. 24b erreicht ist. Obgleich die Versorgungsspannung weiter ansteigt, bleibt die Spannung U_{z} bedingt durch die Zener-Dioden 24a, 24b konstant, beispielsweise auf 22 V.

In der DIAC-Ersatzschaltung wird durch die Freigabeschaltung 36 die Spannung U_{z} mit einem Referenzwert, nämlich ebenfalls bevorzugt 22 V, verglichen und bei Erreichen der 22 V ein Freigabesignal erzeugt. Dieses Freigabesignal wird dem Vergleicher 53 zugeführt und gibt diesen zum Zeitpunkt T1 frei. An dem Vergleicher 53 liegt einerseits eine einstellbare Schwellenwertspannung an und andererseits eine rampenförmige Spannung, die der Rampengenerator 51 erzeugt. Sobald diese rampenförmige Spannung die Schwellenwertspannung erreicht, erzeugt der Vergleicher 53 ein Steuersignal, mit dem das Schaltelement 32 gesteuert wird.

Mit Bezug auf die Fig. 3 bedeutet dies, dass zum Zeitpunkt T1 der Vergleicher 53 freigegeben wird und zum Zeitpunkt T2, also nach Ablauf einer Zeitdauer ΔT das Steuersignal erzeugt wird. Das Schaltelement 32 wird folglich zum Zeitpunkt T2 zum Schließen angesteuert.

Nach dem Schließen des Schaltelements 32 liegt der Zündkondensator 22 und damit die Zündspannung U_{z} am Gate 25 des TRIACs 14 und führt aufgrund der gewählten Spannungshöhe zu einem Zünden des TRIACs 14. Über diese Verbindung kann sich der Zündkondensator 22 bis zum Ende der Zündung nahezu vollständig entladen. Bei einer Restspannung U_{z} von ca. 2 V wird das Schaltelement 32 wieder geöffnet, so dass mit der nächsten Halbwelle der Versorgungsspannung der vorgenannte Vorgang erneut ablaufen kann.

Wie allgemein bekannt, wird der TRIAC 14 beim nächsten Nulldurchgang der Versorgungsspannung bzw. des Stroms, zu Beginn der nächsten Halbwelle, sperrend, so dass der Universalmotor 16 letztlich nur im Zeitfenster T2 bis zum Nulldurchgang der Wechselspannung mit Energie versorgt wurde.

Durch Verschieben des Zeitpunkts T2 und damit einem Vergrößern des Zeitabstands zum nächsten Nulldurchgang lässt sich die Leistung verändern. Das heißt, dass durch Verändern der Zeitperiode ΔT die Leistung eingestellt werden kann.

Die Funktion der Überwachungseinrichtung 60 besteht nun darin, die Einstellposition des Stellelements 39 zu erfassen und abhängig davon ein Signal an das Zeitglied 38 zu senden, das ein Deaktivieren des Zeitglieds 38 zur Folge hat. Unter "Deaktivieren" ist dabei gemeint, dass kein Freigabesignal mehr erzeugt wird, um das Schaltelement 32 zu schließen. Die Zeitkonstante wird folglich unendlich.

Die Überwachungseinrichtung 60 ist so ausgelegt, dass dieses Signal zum Deaktivieren des Zeitglieds 38 dann erzeugt und übermittelt wird, wenn das Stellelement 39 einen Endanschlag erreicht hat. Üblicherweise ist es der Endanschlag im Bereich der Minimalleistung.

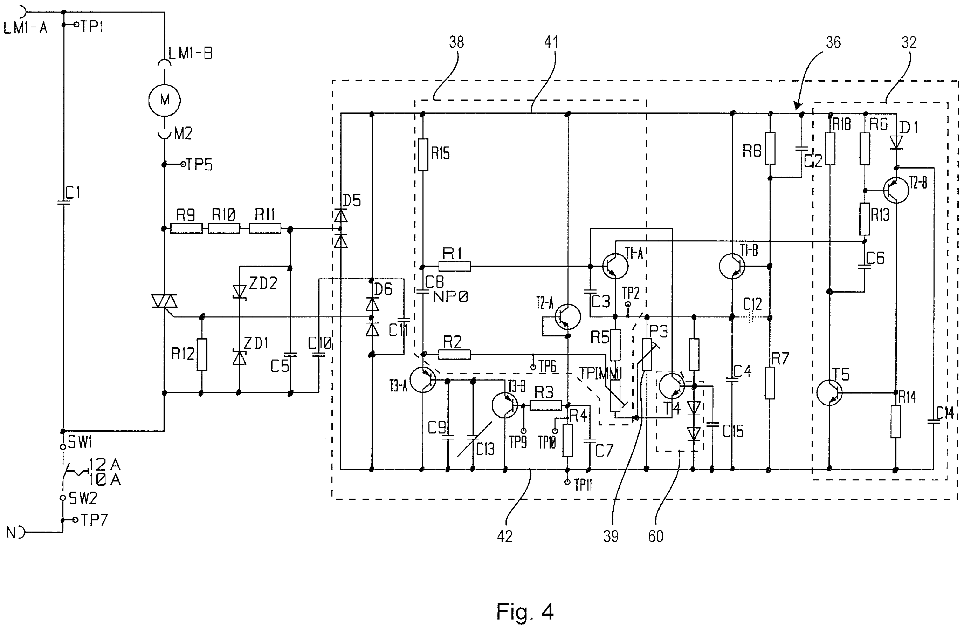

Eine konkrete Ausgestaltung der Phasenanschnittsteuerung 10 und insbesondere der DIAC-Ersatzschaltung 30 ist in Fig. 4 dargestellt, wobei auf die mit gleichen Bezugszeichen wie in Fig. 1, 2A und 2B gekennzeichneten Elemente nicht nochmals neu eingegangen werden soll.

Die DIAC-Ersatzschaltung 30 weist einen aus vier Dioden D5, D6 gebildeten Brückengleichrichter auf, der dafür sorgt, dass innerhalb der DIAC-Ersatzschaltung 30 und damit an den beiden Spannungsseiten 41, 42 für jede Halbwelle der Versorgungsspannung gleiche Polarität herrscht.

Das Schaltelement 32 wird innerhalb der DIAC-Ersatzschaltung 30 von den Transistoren T5 und T2-B, den Widerständen R18, R13, R6 und R14 und dem Kondensator C6 gebildet. Der Transistor T5 (npn-Transistor) liegt in Reihe mit dem Widerstand R18 zwischen den beiden Seiten 41 und 42. Parallel zu dem Widerstand 18 liegt eine Reihenschaltung aus den Widerständen R6 und R13 sowie dem Kondensator C6. Der Transistor T2-B liegt in Reihe mit einem Widerstand R14 zwischen den beiden Seiten 41, 42. Der Transistor T2-B ist als pnp-Transistor ausgebildet, dessen Basis mit dem Verbindungspunkt der beiden Widerstände R6 und R13 verbunden ist. Der Kollektor des Transistors T2-B ist mit der Basis des Transistors T5 und dem Widerstand R14 verbunden.

Wird über den Widerstand R13 der Transistor T2-B angesteuert, erfolgt über den Transistor T5 und den Kondensator C6 eine dynamische Selbsthaltung. Der Widerstand R13 begrenzt dabei den maximalen Strom. Das Schaltelement 32, d.h. die beiden Transistoren T2-B und T5, schaltet erst dann wieder ab, wenn die Spannung auf unter ca. 2 V gefallen ist, also der Zündkondensator 22 fast vollständig entladen ist.

Das Zeitglied 38 besteht im Wesentlichen aus dem Kondensator C8, dem Widerstand R15 und dem npn-Transistor T1-A, der bei einer Aufsteuerung des Schaltelements 32 aktiviert, d.h. leitend, wird.

Wie in Fig. 4 zu erkennen ist, liegt der Widerstand R15 in Reihe mit dem Kondensator C8 und bildet somit ein RC-Glied. Die Basis des Transistors T1-A ist über einen Widerstand R1 mit dem Mittenabgriff des RC-Glieds R15, C8 verbunden.

Das RC-Glied R15, C8 dient dazu, eine Spannungsrampe an der Basis des Transistors T1-A zu erzeugen, um den Transistor T1-A nach Erreichen eines bestimmten Werts (Schwellenwerts) leitend zu schalten.

Zur Einstellung des Schwellenwerts und damit der Zeitdauer ΔT ist das Stellelement 39 als Potentiometer P3 vorgesehen, das den Emitter des Transistors T1-A mit der Seite 42 verbindet. Der Mittenabgriff des Potentiometers P3 ist über einen Widerstand R2 mit dem Kondensator C8 verbunden. Über ein Verstellen des Potentiometers P3 lässt sich damit der Schwellenwert, bei dessen Erreichen geschaltet wird, verändern.

Über einen Spannungsteiler R8 und R7 wird über einen Transistor T1-B eine interne Referenzspannung erzeugt, die als Referenz sowohl für die durch das Potentiometer P3 gebildete Stelleinrichtung als auch für die Rampenerzeugung dient. Parallel zu dem Widerstand R8 ist ein Kondensator C2 vorgesehen, der eine "Frühzündung" unterbindet, indem die Referenzspannung angehoben wird, bis die Spannung am Zündkondensator 22 konstant bleibt. Dieser Schaltungsteil bildet somit die Freigabeschaltung 36.

Die DIAC-Ersatzschaltung 30 weist auch die bereits erwähnte Sanftanlaufschaltung auf, die über die Transistoren T3-A und T3-B gebildet wird. Grundsätzlich dient die Sanftanlaufschaltung dazu, die Zeitdauer ΔT, also die Rampenhöhe innerhalb der ersten Halbwellen nach dem Start, auf den gewünschten eingestellten Wert zu bringen.

Die erwähnte Überwachungseinrichtung 60 wird im Wesentlichen durch einen Transistor T4 gebildet, dessen Kollektor über den Widerstand R1 mit dem Mittenabgriff des RC-Glieds R15, C8 verbunden ist. Der Emitter des Transistors T4 ist mit dem Mittenabgriff des Potentiometers P3 verbunden. Insgesamt ergibt sich somit bei leitendem Transistor T4 eine Verbindung von einem Anschluss des Kondensators C8 über den Widerstand R1 und den Widerstand R2 zu dem anderen Anschluss des Kondensators C8.

Die Basis des Transistors T4 ist über zwei Dioden mit der Spannungsseite 42 verbunden. Die beiden Dioden sorgen dafür, dass eine feste Referenzspannung U_{ref} an der Basis des Transistors T4 anliegt.

Verändert sich nun die am Mittenabgriff des Potentiometers P3 vorhandene Spannung auf einen bestimmten Wert, geht der Transistor T4 in den leitenden Zustand über, so dass darüber eine Verbindung der beiden Seiten des Kondensators C8 erfolgt.

Auf diese Weise verliert das RC-Glied seine Funktion, und es wird keine rampenförmige Spannung mehr erzeugt.

Dies hat insgesamt zum Ergebnis, dass der TRIAC, d.h. das Schaltungselement 14, nicht mehr eingeschaltet wird.

Über die Wahl der Dioden, die zwischen der Basis des Transistors 4 und der Spannungsseite 42 liegen, lässt sich diejenige Einstellposition des Potentiometers einstellen, an der der Transistor T4 leitend wird. Das heißt mit anderen Worten, dass der Transistor T4 sozusagen als Spannungsvergleicher arbeitet, der die Spannung an der Basis mit der Spannung am Mittenabgriff des Potentiometers P3, die am Emitter anliegt, vergleicht. Übersteigt die Basis-Emitter-Spannung am Transistor T4 einen bestimmten Wert, wird der Transistor dann leitend.

Zusammenfassend liefert die Überwachungseinrichtung 60 mit dem Transistor T4 und den Dioden eine Möglichkeit, die Phasenanschnittsteuerung abzuschalten, wenn das Potentiometer in eine bestimmte Endposition gebracht wird. Sobald das Potentiometer aus dieser Endstellung bewegt wird, verändert sich die Basis-Emitter-Spannung am Transistor T4, und als Reaktion darauf wird der Transistor T4 in den sperrenden Zustand zurückkehren, so dass das RC-Glied R15, C8 wieder normal arbeiten kann und die rampenförmige Spannung erzeugen kann.

## Patentansprüche

1. Vorrichtung zur Leistungssteuerung von an ein Wechselspannungs-Versorgungsnetz angeschlossenen elektrischen Verbraucher, mit
- einem in Reihe mit dem Verbraucher liegenden Schaltungselement (12, 14), das einen Steuereingang aufweist,
- einer Zündeinrichtung zur Ansteuerung des Schaltungselements (12, 14) und Ausführung eines Phasenanschnitts mit einem einstellbaren Phasenwinkel,
- einem Einstellelement (39), das der Zündeinrichtung zugeordnet ist und ein Einstellen des Phasenwinkels erlaubt,
**gekennzeichnet durch**
eine Überwachungseinrichtung (60), die dem Einstellelement (39) sowie der Zündeinrichtung zugeordnet ist und ausgelegt ist, die Einstellposition des Einstellelements (39) zu erfassen und abhängig davon die Zündeinrichtung zu deaktivieren.
wobei das Einstellelement (39) ein Potentiometer mit einem Ausgang ist, und die Überwachungseinrichtung (60) mit dem Ausgang des Potentiometers verbunden ist, um die Spannung am Ausgang und damit die Einstellposition zu erfassen und die Überwachungseinrichtung (60) ein Mittel zum Vergleich der Spannung am Ausgang mit einem Spannungsreferenzwert aufweist.

2. Vorrichtung nach Anspruch 1, **dadurch gekennzeichnet, dass** die Zündeinrichtung ein Zeitglied mit zumindest einem Kondensator (C8) aufweist, und die Überwachungseinrichtung (60) einen Transistor (T4) aufweist, dessen Basis mit einer weitgehend konstanten Spannung versorgt ist, dessen Emitter mit dem Ausgang des Potentiometers und dem Zeitglied verbunden ist, so dass der Transistor (T4) in den leitenden Zustand übergeht, wenn die Spannung am Ausgang unter einen bestimmten Wert fällt, der durch die Spannung an der Basis festegelegt ist, und dessen Kollektor mit dem Zeitglied verbunden ist, so dass das Zeitglied im leitenden Zustand des Transistors (T4) deaktiviert ist.

3. Vorrichtung nach Anspruch 1 oder 2, **dadurch gekennzeichnet, dass** das Zeitglied einen Widerstand (R15) und einen Kondensator (C8) aufweist, wobei der Transistor (T4) mit Kollektor und Emitter parallel zu dem Kondensator (C8) liegt.

4. Vorrichtung nach einem der vorhergehenden Ansprüche, **dadurch gekennzeichnet, dass** das Schaltungselement (12) ein TRIAC (14) ist.

5. Vorrichtung nach einem der vorhergehenden Ansprüche, **dadurch gekennzeichnet, dass**
ein Zündkondensator, der mit der Zündeinrichtung gekoppelt ist und die zum Aktivieren des Schaltungselements erforderliche Energie liefert, vorgesehen ist, und
die Zündeinrichtung aufweist:
- ein Schaltelement, das bei dessen Aktivierung eine Verbindung zwischen Zündkondensator und Steuereingang des Schaltungselements herstellt;
- ein Freigabeelement, das die am Zündkondensator anliegende Spannung mit einem Referenzwert vergleicht und ein Freigabesignal erzeugt, und
- ein Zeitelement, das mit dem Freigabeelement verbunden ist und in Antwort auf das Freigabesignal und nach Ablauf einer vorgebbaren Zeitdauer das Schaltelement aktiviert, derart, dass die im Zündkondensator gespeicherte Energie nahezu vollständig zum Zünden des Schaltungselements verwendet wird.

## Claims

1. A device for controlling the power of electrical loads connected to an alternating voltage supply network, with
- a circuit element (12, 14) in series with the load and having a control input,
- an ignition device for driving the circuit element (12, 14) and performing a phase control with an adjustable phase angle,
- an adjusting element (39) which is associated with the ignition device and allows the phase angle to be adjusted,
**characterised by**
a monitoring device (60) which is assigned to the setting element (39) and the ignition device and is designed to detect the setting position of the setting element (39) and to deactivate the ignition device as a function thereof,
wherein the adjustment element (39) is a potentiometer having an output, and the monitoring device (60) is connected to the output of the potentiometer to detect the voltage at the output and hence the adjustment position, and the monitoring device (60) comprises means for comparing the voltage at the output with a voltage reference value.

2. The device according to claim 1, **characterized in that** the ignition device comprises a timing element with at least one capacitor (C8), and the monitoring device (60) comprises a transistor (T4), the base of which is supplied with a substantially constant voltage, the emitter of which is connected to the output of the potentiometer and the timing element, so that the transistor (T4) switches to the conductive state when the voltage at the output falls below a certain value determined by the voltage at the base and whose collector is connected to the timing element, so that the timing element is deactivated in the conductive state of the transistor (T4).

3. The device according to claim 1 or 2, **characterized in that** the timing element comprises a resistor (R15) and a capacitor (C8), the transistor (T4) with collector and emitter being connected in parallel with the capacitor (C8).

4. The device according to any of the preceding claims, **characterised in that** the circuit element (12) is a TRIAC (14).

5. The device according to any of the preceding claims, **characterised in that**
an ignition capacitor is provided which is coupled to the ignition device and supplies the energy required to activate the circuit element, and
the ignition device comprises:
- a switching element which, when activated, establishes a connection between the ignition capacitor and the control input of the switching element;
- an enabling element which compares the voltage applied to the ignition capacitor with a reference value and generates an enable signal, and
- a time element which is connected to the enable element and, in response to the enable signal and after a predeterminable period of time has elapsed, activates the switching element in such a way that the energy stored in the ignition capacitor is almost completely used to ignite the switching element.

## Revendications

1. Arrangement pour la commande de puissance de récepteurs électriques raccordés à un réseau d'alimentation en tension alternative, comprenant
- un élément de commutation (12, 14) qui se trouve en série avec le récepteur et qui possède une entrée de commande,
- un dispositif d'amorçage destiné à attaquer l'élément de commutation (12, 14) et à exécuter un découpage de phase avec un angle de phase réglable,
- un élément de réglage (39) qui est associé au dispositif d'amorçage et qui permet un réglage de l'angle de phase
**caractérisé par**
un dispositif de surveillance (60), qui est associé à l'élément de réglage (39) ainsi qu'au dispositif d'amorçage et qui est conçu pour détecter la position de réglage de l'élément de réglage (39) et désactiver le dispositif d'amorçage en fonction de celle-ci,
l'élément de réglage (39) étant un potentiomètre muni d'une sortie et le dispositif de surveillance (60) étant relié à la sortie du potentiomètre afin de détecter la tension à la sortie et ainsi la position de réglage et le dispositif de surveillance (60) possédant un moyen destiné à comparer la tension à la sortie avec une valeur de référence de tension.

2. Arrangement selon la revendication 1, **caractérisé en ce que** le dispositif d'amorçage possède un temporisateur comprenant au moins un condensateur (C8), et le dispositif de surveillance (60) possède un transistor (T4) dont la base est alimentée avec une tension en grande partie constante, dont l'émetteur est relié à la sortie du potentiomètre et au temporisateur, de sorte que le transistor (T4) passe à l'état passant lorsque la tension à la sortie chute au-dessous d'une valeur définie, qui est fixée par la tension à la base, et dont le collecteur est relié au temporisateur, de sorte que le temporisateur est désactivé à l'état passant du transistor (T4).

3. Arrangement selon la revendication 1 ou 2, **caractérisé en ce que** le temporisateur possède une résistance (R15) et un condensateur (C8), le transistor (T4) avec le collecteur et l'émetteur étant parallèle au condensateur (C8).

4. Arrangement selon l'une des revendications précédentes, **caractérisé en ce que** l'élément de commutation (12) est un TRIAC (14).

5. Arrangement selon l'une des revendications précédentes, **caractérisé en ce que**
un condensateur d'amorçage est présent, lequel est connecté au dispositif d'amorçage et délivre l'énergie nécessaire pour activer l'élément de commutation, et
le dispositif d'amorçage possède :
- un élément de commutation qui, lors de son activation, établit une liaison entre le condensateur d'amorçage et l'entrée de commande de l'élément de commutation ;
- un élément de validation qui compare la tension appliquée au condensateur d'amorçage avec une valeur de référence et génère un signal de validation, et
- un élément de temps, qui est relié à l'élément de validation et, en réponse au signal de validation et après l'écoulement d'une durée qui peut être prédéfinie, active l'élément de commutation de telle sorte que l'énergie accumulée dans le condensateur d'amorçage est presque entièrement utilisée pour amorcer l'élément de commutation.
